# EUROPEAN PATENT APPLICATION

(11) **EP 1 120 978 A1**
(43) Date of publication of application: **01.08.2001**
(21) Application number: 00300621.0
(22) Date of filing: 27.01.2000
(51) Int. Cl.: H04N 7/52, H04N 7/24

(54) **Apparatus capable of encoding audio/video data with decreased buffer capacity**

(71) Applicant: MATSUSHITA ELECTRIC INDUSTRIAL CO., LTD., Kadoma-shi, Osaka 571-8501 (JP)
(72) Inventor: Inoue, Shuji, Zama-shi, Kanagawa-ken 228-0015 (JP)
(74) Representative: Leeming, John Gerard

(57) **Abstract**

An encoding apparatus for use in a recording system such as a DVD system is provided. The encoding apparatus includes an audio encoder transforming inputted audio data into an audio data stream, a video encoder transforming inputted video data into a video data stream, and a system encoder transforming the video and audio data streams into an audio/video data steam, for example, in an MPEG format. The encoding apparatus also has a video stream buffer and an audio stream buffer disposed upstream of the system encoder. The video steam buffer and the audio stream buffer store therein the video data steam and the audio data stream produced by the video encoder and the audio encoder for a preselected period of time, thereby allowing a buffer installed downstream of the system encoder to have a smaller capacity and a pretrigger recording operation to be performed effectively.

## Description

The present invention relates generally to an AV encoding apparatus, and more particularly to an AV encoding apparatus having a stream buffer which is disposed upstream of a system encoder and which has a storage capacity greater than that of a stream buffer installed following the system encoder, thereby decreasing a total buffer capacity and allowing audio and video data after a specified pretrigger record start time to be recorded effectively.

Fig. 6 shows a typical AV encoding apparatus which includes a video encoder 61, an audio encoder 62, a system encoder 63, and a system stream buffer 64. The AV encoding apparatus, as clearly shown in the drawing, has the system stream buffer 64 disposed downstream of the system encoder 63 and thus encounters a drawback in that a system stream containing overheads added by the system encoder 63 is always stored in the system stream buffer 64, thereby resulting in difficulty in decreasing a buffer capacity. Further, when it is required to perform a pretrigger recording operation, as will be discussed later in detail, the system stream produced by the system encoder 63 must be recorded in a storage medium, which will pose a problem that audio and video data which are unmatched in time sequence are reproduced.

It is therefore a principal object of the present invention to avoid the disadvantages of the prior art.

It is another object of the present invention to provide an AV encoding apparatus which is designed to allow the capacity of a stream buffer to be decreased and capable of performing a pretrigger recording operation effectively.

According to one aspect of the invention, there is provided an encoding apparatus which comprises: (a) an audio encoder transforming inputted audio data into an audio data stream; (b) a video encoder transforming inputted video data into a video data stream; (c) an audio stream buffer storing therein the audio data stream produced by the audio encoder; (d) a video stream buffer storing therein the video data steam produced by the video encoder; and (e) a system encoder transforming the video data stream and/or and the audio data stream picked up from the video stream buffer and the audio stream buffer into an audio and/or video data steam in a preselected format.

In the preferred mode of the invention, a stream buffer may be installed downstream of the system encoder which has a capacity only required to buffer overheads produced by the system encoder.

The audio and/or video data stream outputted from the system encoder is used in recording system to record sound and/or images contained in the audio and/or video data stream in a storage medium. A controller is further provided which controls an operation of the system encoder. When it is required for the system encoder to output the audio and/or video data stream including data picked up a preselected period of time ago, the controller controls the system encoder to output the audio and/or video data stream made up of the audio data stream following data buffered in the audio stream buffer the preselected period of time ago and the video data stream following data buffered in the video stream buffer the preselected period of time ago.

When it is required for the recording system to record the sound and/or images in the storage medium, the controller may output a command signal to the system encoder to output the audio and/or video data stream made up of the video data stream following data buffered in the video stream buffer the preselected period of time before the recording system is required to record the sound and/or images and the audio data stream following data buffered in the audio stream buffer the preselected period of time before the recording system is required to record the sound and/or images.

The system encoder output the audio and/or video data stream in an MPEG format.

According to the second aspect of the present invention, there is provided an audio and/or video data recording apparatus which comprises: an encoding unit; and a recording unit. The encoding unit includes (a) an audio encoder transforming inputted audio data into an audio data stream, (b) a video encoder transforming inputted video data into a video data stream, (c) an audio stream buffer storing therein the audio data stream produced by the audio encoder, (d) a video stream buffer storing therein the video data steam produced by the video encoder, and (e) a system encoder transforming the video data stream and/or the audio data stream picked up from the video stream buffer and the audio stream buffer into an audio and/or video data steam in a preselected format. The recording unit records the audio and/or video data stream in a storage medium.

In the preferred mode of the invention, a buffer may be installed downstream of the system encoder which has a capacity smaller than that of each of the audio stream buffer and the video stream buffer.

A controller is further provided which controls an operation of the system encoder. When it is required for the system encoder to output the audio and/or video data stream including data picked up a preselected period of time ago, the controller controls the system encoder to output the audio and/or video data stream made up of the audio data stream following data buffered in the audio stream buffer the preselected period of time ago and the video data stream following data buffered in the video stream buffer the preselected period of time ago.

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is a block diagram which shows a disc recording system equipped with an AV encoding apparatus according to the present invention;
Fig. 2 is a block diagram which shows an AV encoding apparatus;
Fig. 3 shows transformation of audio and video data into a system stream;
Fig. 4 shows a system stream used in pretrigger recording in a conventional system;
Fig. 5 shows video and audio data streams used in pretrigger recording in a disc recording system equipped with an encoding apparatus of the invention; and
Fig. 6 is a block diagram which shows a conventional AV encoding apparatus.

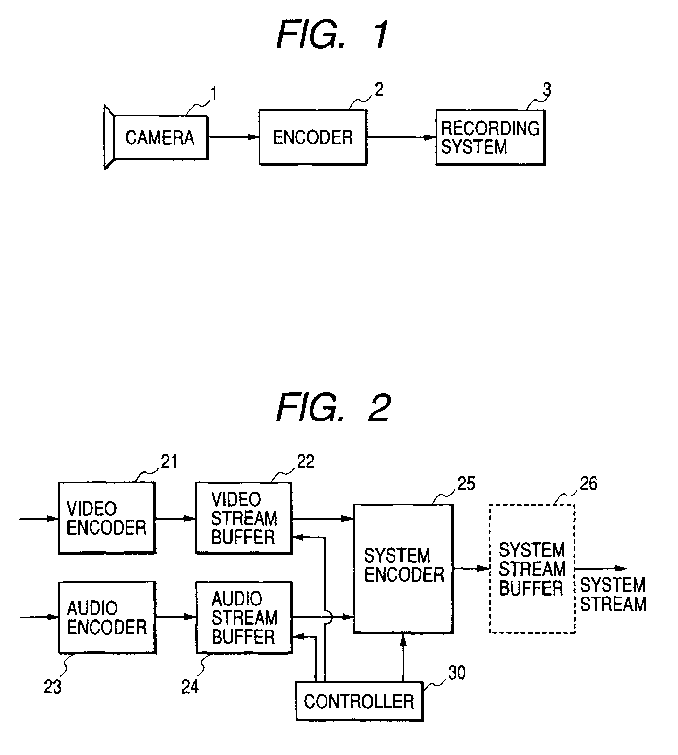

Referring now to the drawings, particularly to Fig. 1, there is shown a disc recording system such as a DVD recording system equipped with an AV encoding apparatus 2 according to the present invention.

A camera 1 has a microphone and captures sound and images to produce AV data (audio and/or video data). The AV encoding apparatus 2 converts or codes the AV data inputted from the camera 1 into compressed digital data. The compressed digital data is then recorded on a storage medium such as a DVD through a recording system 3.

The AV encoding apparatus 2 includes, as shown in Fig. 2, a video encoder 21, a video stream buffer 22, an audio encoder 23, an audio stream buffer 24, a system encoder 25, and a controller 30.

The video encoder 21 encodes video data outputted from the camera 1 into compressed digital video data. The compressed digital video data is stored temporarily in the video stream buffer 22 and then inputted into the system encoder 25. Similarly, the audio encoder 23 encodes audio data outputted from the camera 1 into compressed digital audio data. The compressed digital audio data is stored temporarily in the audio stream buffer 24 and then inputted to the system encoder 25. The video stream buffer 22 and the audio stream buffer 24 each have a storage capacity enough to hold the data for a preselected period of time (e.g., 10 sec.) required for the pregrigger recording.

The system encoder 25 multiplexs or transforms the digital video data stream and/or the audio data stream inputted from the video stream buffer 22 and the audio stream buffer 24 into a system stream in a MPEG data format and outputs it directly or through a system stream buffer 26 as needed to the recording system 3.

The video encoder 21, the video stream buffer 22, the audio encoder 23, the audio stream buffer 24, the system encoder 25, and the system stream buffer 26 are controlled in operation by the controller 30.

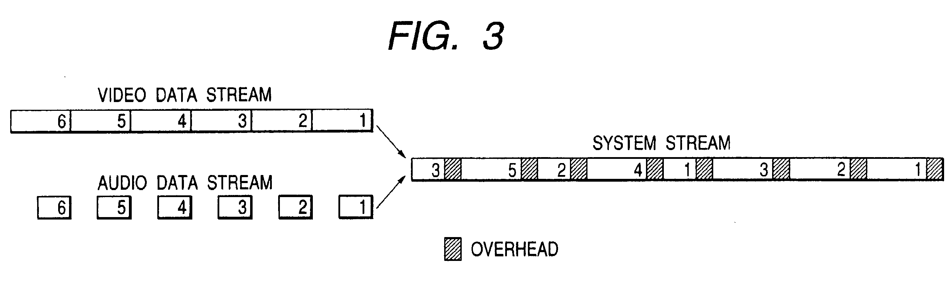

Fig. 3 shows the transformation of the video and audio data streams into the system stream performed in the system encoder 25.

The production of the system stream, for example, in the MPEG format requires an interframe correlation of video information, thus consuming much time in decoding the video information as compared with the audio information. Accordingly, a video data block 1, a video data block 2, and a video data block 3 are first outputted in sequence. Subsequently, an audio data block 1, a video data block 4, an audio data block 2, an audio data block 5, and an audio data block 3 are outputted in sequence in the MPEG format. Overheads such as headers, as illustrated in black squares, are added to leading portions of the blocks, respectively. Note that the video data blocks 1 to 6 correspond in time sequence to the audio data blocks 1 to 6, respectively.

With the above described structure of this embodiment, a buffer, if used following the system encoder 25, (i.e., the system stream buffer 26) may have a capacity only required to store the overheads contained in the system stream outputted from the system encoder 25, thus allowing the capacity of the buffer to be decreased greatly as compared with a conventional system such as the one shown in Fig. 6 which uses the system stream buffer 64 having a capacity required for storing all frames of audio and video data.

A pretrigger recording operation will be described below.

The pretrigger recording is an action or function to record sound and images captured for a preselected period of time before a record start request signal is produced in a recording system. The pretrigger recording requires encoding and buffering audio and video data picked up before the record start request signal is produced in advance. The buffered audio and video data is recorded on a storage medium after the record start request signal is produced.

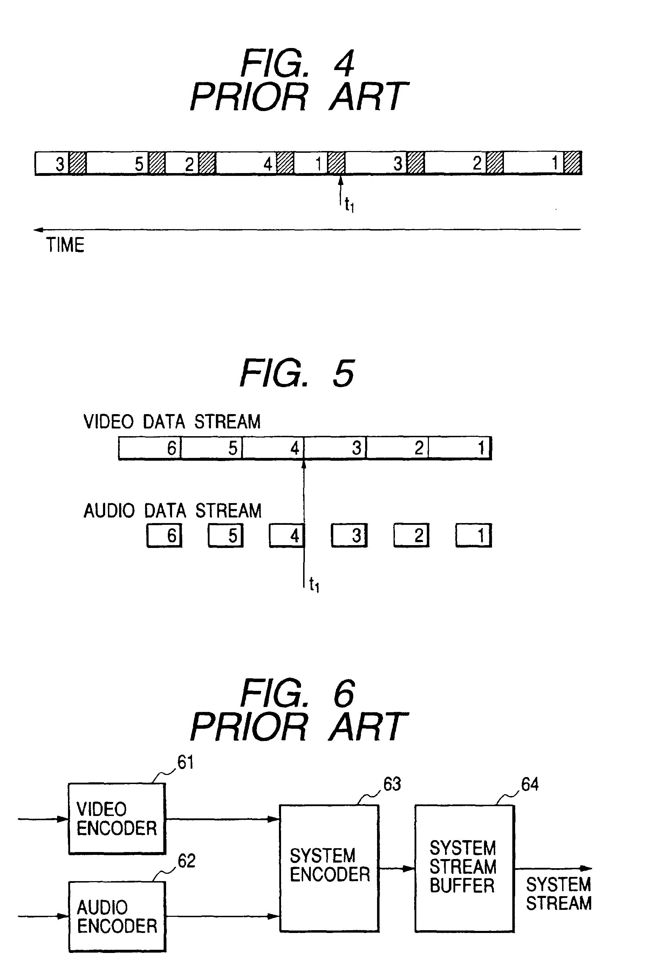

Fig. 4 shows the pretrigger recording of audio and video data buffered in the form of a system bit stream in a conventional encoding apparatus such as the one shown in Fig. 6. If the pretrigger recording is initiated at the end of the video block 3 of the system bit stream (i.e., time *t1*), the audio data is recorded from the audio data block 1, and the video data from the video data block 4. The audio data and video data usually have recorded therein time stamps indicating output times, respectively. Thus, even if times when the audio data and video data were recorded are different from each other, they are reproduced in sequence, however, the audio data is reproduced prior to reproduction of the video data. Specifically, sound picked up before a specified pretrigger recording start time (i.e., time *t1*) is reproduced undesirably without images. Further, the recording of the audio data picked up before the specified pretrigger recording start time poses a problem in that a total recording time is decreased.

Fig. 5 shows video and audio data stored in the form of video and audio data streams in the vide stream buffer 22 and the audio stream buffer 24 of the encoding apparatus 2 of the invention.

When it is required for the recording system 3 to perform the pretrigger recording in addition to the standard recording, the recording system 3 outputs a pretrigger recording request signal to the controller 30. The controller 30 outputs a pregrigger start signal to the video stream buffer 22, the audio stream buffer 24, and the system encoder 25. The video stream buffer 22 is responsive to the pretrigger start signal to start to output the video data stream following data buffered a preselected period of time before input of the pretrigger start signal to the system encoder 25. Similarly, the audio stream buffer 24 is responsive to the pretrigger start signal to output the audio data stream following data buffered the preselected period of time before input of the pretrigger start signal to the system encoder 25. The system encoder 25 is responsive to the pretrigger start signal to transform the inputted video and audio data stream into the system stream, as described above, and output it to the recording system 3 directly or through the system stream buffer 26.

For instance, if the pretrigger recording request signal is outputted from the recording system 3, as shown in Fig. 5, at the end of the video block 3 of the video data stream (i.e., time *t1*) being buffered in the video stream buffer 22, the video data is recorded from the video data block 4, and the audio data from the audio data block 4 of the audio data stream being buffered in the audio stream buffer 24. Therefore, sound picked up before a specified pretrigger recording start time (i.e., time *t1*) is not reproduced. This eliminates the need for recording such sound in a storage medium, thereby solving the above problem that the total recording time is decreased.

The audio and video data picked up before the record start request signal is produced and outputted in the form of the system stream from the system encoder 25 need not always be used in the pretrigger recording and may alternatively be used only for reproducing sound and/or images through, for example, a monitor without being recorded on a storage medium.

The controller 30 may alternatively output the pretrigger start signal only to the system encoder 25. In this case, the system encoder 25 provides pickup signals to the video stream buffer 22 and the audio stream buffer 24, respectively, to have them output the buffered data.

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiments which can be embodied without departing from the principle of the invention as set forth in the appended claims.

## Claims

1. An encoding apparatus comprising:
an audio encoder transforming inputted audio data into an audio data stream;
a video encoder transforming inputted video data into a video data stream;
an audio stream buffer storing therein the audio data stream produced by said audio encoder;
a video stream buffer storing therein the video data steam produced by said video encoder; and
a system encoder transforming the video data stream and/or the audio data stream picked up from said video stream buffer and said audio stream buffer into an audio and/or video data steam in a preselected format.

2. An encoding apparatus as set forth in claim 1, further comprising a stream buffer installed downstream of said system encoder, said stream buffer having a capacity only required to buffer overheads produced by the system encoder.

3. An encoding apparatus as set forth in claim 1 or 2, wherein said audio and/or video data stream outputted from said system encoder is used in recording system to record sound and/or images contained in the audio and/or video data stream in a storage medium, and further comprising a controller
controlling an operation of said system encoder, when it is required for said system encoder to output the audio and/or video data stream including data picked up a preselected period of time ago, said controller controlling said system encoder to output the audio and/or video data stream made up of the audio data stream following data buffered in said audio stream buffer the preselected period of time ago and the video data stream following data buffered in said video stream buffer the preselected period of time ago.

4. An encoding apparatus as set forth in claim 1 or 2, wherein the audio/video data stream outputted from said system encoder is used in a recording system to record sound and/or images contained in the audio and/or video data stream in a storage medium, and further comprising a controller controlling an operation of said system encoder, when it is required for the recording system to record the sound and/or images in the storage medium, said controller outputting a command signal to said system encoder to output the audio and/or video data stream made up of the video data stream following data buffered in said video stream buffer a preselected period of time before the recording system is required to record the sound and/or images and the audio data stream following data buffered in said audio stream buffer the preselected period of time before the recording system is required to record the sound and/or images.

5. An encoding apparatus as set forth in any one of claims 1 to 4, wherein said system encoder outputs the audio and/or video data stream in an MPEG format.

6. An audio/video data recording apparatus comprising:
an encoding unit including
an audio encoder transforming inputted audio data into an audio data stream,
a video encoder transforming inputted video data into a video data stream,
an audio stream buffer storing therein the audio data stream produced by said audio encoder,
a video stream buffer storing therein the video data steam produced by said video encoder, and
a system encoder transforming the video data stream and/or video data stream picked up from said video stream buffer and said audio stream buffer into an audio and/or video data steam in a preselected format; and
a recording unit recording the audio and/or video data stream in a storage medium.

7. An audio/video data recording apparatus as set forth in claim 6, further comprising a buffer installed downstream of said system encoder, said buffer having a capacity smaller than that of each of said audio stream buffer and said video stream buffer.

8. An audio/video data recording apparatus as set forth in claim 6 or 7,
further comprising a controller controlling an operation of said system encoder, when it is required for said system encoder to output the audio and/or video data stream including data picked up a preselected period of time ago, said controller controlling said system encoder to output the audio and/or video data stream made up of the audio data stream following data buffered in said audio stream buffer the preselected period of time ago and the video data stream following data buffered in said video stream buffer the preselected period of time ago.
